# FASCICULE DE BREVET EUROPEEN

(11) **EP 2 989 276 B1**
(45) Date de publication et mention de la délivrance du brevet: **11.04.2018**
(21) Numéro de dépôt: 14718632.4
(22) Date de dépôt: 24.02.2014
(51) Int. Cl.: E05F 15/632, E05D 15/10

(54) **DISPOSITIF DE DEPLACEMENT D'AU MOINS UN VANTAIL DE PORTE, VEHICULE AINSI POURVU ET PROCEDE ASSOCIE**
VORRICHTUNG ZUM BEWEGEN VON ZUMINDEST EINEM TÜRFLÜGEL, DAMIT AUSGESTATTETES KRAFTFAHRZEUG UND VERFAHREN DAFÜR.
DEVICE FOR MOVING AT LEAST A DOOR WING, A VEHICLE PROVIDED THEREWITH AND METHOD THEREFOR

(30) Priorité: 29.03.2013 FR 1352939
(43) Date de publication de la demande: 02.03.2016
(73) Titulaire: Faiveley Transport Tours, 37701 Saint-Pierre-des-Corps (FR)
(72) Inventeur: CARRION ESPELTA, Joan, E-43350 Tarragona (ES); PREVOST, Jany, F-37550 Saint-Avertin (FR); PIERRE, Nicolas, F-37530 Saint-Regle (FR); VAUCELLE, Philippe, F-37300 Joue Les Tours (FR)
(74) Mandataire: Novagraaf Technologies
(86) Numéro de dépôt international: PCT/FR2014/050376
(87) Numéro de publication internationale: WO 2014/154964

(56) Documents cités:
- DE-U1-202005 015 166

## Description

L'invention concerne un dispositif de déplacement d'au moins un vantail de porte de véhicule de transport permettant à des passagers d'entrer et de sortir.

Un tel véhicule comprend un bâti par rapport auquel le (chaque) vantail est mobile entre des positions respectivement ouverte et fermée.

Les tramways sont ici particulièrement concernés. Le document DE202005015166U décrit un dispositif selon le préambule de la revendication 1.

Parmi les défauts des solutions existantes, on peut noter :
- un encombrement important,
- une masse importante,
- un niveau de bruit émis important,
- un entraînement et/ou guidage du (de chaque) vantail qui peut être perfectible.

Afin de surmonter une partie au moins de ces inconvénients et y apporter une solution pertinente, il est proposé que le dispositif de déplacement précité comprenne :
- une poutre fixe, fixée au bâti du véhicule et présentant un axe d'allongement,
- une poutre mobile présentant un axe d'allongement sensiblement parallèle à celui de la poutre fixe et relié au vantail qui est coulissant le long de la poutre mobile, laquelle est reliée à la poutre fixe par des rails de louvoiement fixes par rapport à la poutre fixe et qui supportent ladite poutre mobile en permettant un mouvement de la poutre mobile transversal par rapport aux axes d'allongement des poutres fixe et mobile,
- un moteur fixé à la poutre mobile qui entraîne le vantail dans un mouvement parallèle à l'axe d'allongement de la poutre mobile et qui lors du louvoiement du vantail, entraîne en outre une came motrice, laquelle est pourvue d'une fente où est engagé un pion fixe sur la poutre fixe,
- et un galet central relié à la poutre mobile, fixé au vantail et qui circule dans une gorge de la poutre fixe lors du mouvement du vantail.

Ci-avant, on a pris le parti de ne se référer qu'à un vantail ; mais on peut lire indifféremment des vantaux, et en particulier deux vantaux, y compris dans la description qui suit.

Pour une sécurité et fiabilité de fonctionnement, il est conseillé que des suspensions du vantail soient fixiées à la poutre mobile pour la relier au vantail.

Pour permettre une orientation de 0 à 90° du mouvement en fin de fermeture ou de début d'ouverture (avec donc louvoiement) du vantail (des vantaux) et adapter aisément la cinématique, on recommande que la gorge de la poutre fixe, qui s'étend horizontalement, présente, vers une extrémité, une partie s'étendant de biais par rapport à l'axe d'allongement de la poutre fixe.

Pour un déplacement parallèle de la poutre mobile par rapport à la poutre fixe pendant le mouvement de louvoiement et donc pour éviter un blocage du mécanisme, le moteur s'étend le long d'un des rails de louvoiement, suivant un axe de rotation transversal à l'axe d'allongement de la poutre fixe et porte coaxialement la came motrice, laquelle entraîne par un moyen de conjugaison une came menée disposée le long de l'autre rail, celle-ci comportant une fente dans laquelle un deuxième pion fixe sur la poutre fixe est engagé.

Pour que le moteur puisse à la fois entraîner le ou les vantaux lors de leurs mouvements de translation et entrainer la poutre mobile lors du mouvement de louvoiement, on prévoit:
qu'une première sortie du moteur entraîne directement ou via un réducteur un moyen intermédiaire d'entrainement du vantail (par exemple une courroie),
- et que le moteur présente un stator qui tournera selon le principe du stator tournant en entrainant dans son mouvement la came motrice qui lui sera solidaire, des roulements permettant cela lorsque le galet central atteint ladite partie de la gorge s'étendant de biais.

Une alternative consisterait à utiliser un réducteur à deux sorties (par exemple un réducteur épicycloïdal) au lieu d'utiliser le principe du stator tournant.

Dans le cas d'une porte avec deux vantaux, l'entrainement du deuxième vantail pourra être réalisé par le même moyen d'entrainement que le premier vantail par exemple en utilisant le retour de la courroie d'entrainernent pour générer un mouvement de sens inverse au premier vantail.

La came motrice comportera favorablement un rail de guidage conçu de façon que la rotation du stator du moteur soit conjuguée avec mouvement de louvoiement grâce au galet de louvoiement qui est fixe par rapport à la poutre fixe. Cette première partie du rail aura donc une forme en hélice.

Ansi, selon l'invention, une première partie de la fente de la came motrice présente une forme en hélice d'axe transversal par rapport aux axes d'allongement des poutres fixe et mobile.

Et pour terminer le mouvement et sécuriser la fermeture du vantail, on conseille qu'une (autre) partie de la fente de la came motrice présente une forme en portion de cercle d'axe parallèle à l'axe d'allongement de la poutre fixe.

On recommande par ailleurs qu'un moyen de rappel rappelle la came menée de façon que le deuxième pion reste engagé dans la portion en arc de cercle de la fente, le moyen de conjugaison imposant la même position relative du premier pion et de la came motrice.

Ainsi, par exemple via un ressort de rappel la came menée pourra être rappelée en position verrouillée et un certain effort sera demandé pour déverrouiller la porte.

Comme le moteur effectue une rotation d'ensemble de 180°, il a fallu concevoir un système de guidage de son câble d'alimentation.

Ainsi est-il proposé que le moteur soit alimenté électriquement par un câble qui passe le long du moyen de conjugaison et autour de la came et qui est fixé à la came et au moyen de conjugaison par des pattes le positionnant au droit du moyen de conjugaison.

Outre le dispositif qui précède, considéré dans tout ou partie de ces caractéristiques, est également concerné un véhicule de transport ferroviaire comprenant :
- son bâti,
- au moins un vantail de porte permettant à des passagers d'entrer et de sortir du bâti et par rapport auquel le vantail se déplace entre des positions respectivement ouverte et fermée,
- et le dispositif précité.

Afin de s'assurer que les efforts générés par la came en cas d'onde de pression ne génèrent pas de déplacement du galet de verrouillage en direction du déverrouillage, on recommande que la partie de la fente de la came motrice en portion de cercle d'axe parallèle à l'axe d'allongement de la poutre fixe s'étende suivant une orientation légèrement rentrante vers l'intérieur de la fente avec une forme d'aronde.

Est aussi ici concerné un procédé pour déplacer, le long d'une ouverture d'un bâti de véhicule de transport, au moins un vantail de porte, entre des positions respectivement fermée et ouverte permettant à des passagers d'entrer et de sortir du véhicule.

Sous un aspect important visant à nouveau à surmonter une partie au moins des inconvénients initialement énoncés et y apporter une solution pertinente, on se propose d'imposer au vantail un déplacement le long de l'ouverture, avec louvoiement par rapport au bâti du véhicule, et ceci :
- en faisant circuler, via un moteur, dans une gorge d'une poutre fixe allongée fixée au bâti le long de l'ouverture de celui-ci, un galet central fixé au vantail,
- en assurant, en fin du mouvement du vantail en direction de la fermeture ou en début de mouvement en direction de l'ouverture, à une poutre mobile reliée au vantail un mouvement transversal par rapport à l'axe d'allongement de la poutre fixe, dans des rails de louvoiement fixes vis-à-vis du bâti via le moteur et le galet central dont la trajectoire imposée par la dite gorge impose le mouvement transversal grâce à une partie de la gorge de la poutre fixe qui s'étend de biais par rapport à l'axe d'allongement de cette poutre fixe.

Pour guider efficacement le/ chaque vantail, on recommande par ailleurs :
- que le dit mouvement transversal de la poutre mobile conserve le parallélisme des poutres mobiles et fixes grâce à deux pions qui circulent respectivement dans une première et une seconde fentes, au moins en partie en hélice, d'une part d'une came motrice entrainée par la rotation d'ensemble du moteur et d'autre part d'une came menée entraînée par la came motrice grâce à un moyen de conjugaison,
- et/ou que, lors du louvoiement du vantail, on fasse entraîner par le moteur, fixé à la poutre mobile, une came motrice pourvue d'une fente où est engagé un pion fixe sur la poutre fixe.

On conseille par ailleurs d'assurer le verrouillage du vantail(ou des vantaux) en position fermée:
- en faisant circulent les deux pions respectivement dans les première et seconde fentes dont une partie présente une forme en portion de cercle d'axe parallèle à l'axe d'allongement de la poutre fixe s'étendant suivant une orientation légèrement rentrante vers l'intérieur de la fente, avec une forme d'aronde,
- et en maintenant en position lesdits deux pions par un moyen de rappel qui sollicite l'une des cames de façon que le pion qu'elle reçoit reste engagé dans la portion en arc de cercle de la fente dont elle est pourvue, le moyen de conjugaison imposant la même position relative de l'autre pion et de l'autre came.

D'autres caractéristiques et avantages des solutions ici présentées ressortiront encore si nécessaire de la description qui suit, à titre d'exemple(s) non limitatif(s), en référence aux dessins annexés dans lesquels :
- les figures 1,2,3,4 montrent un schéma de véhicule dont la porte comprend un ou deux vantaux illustrés fermé(s) ou ouvert(s) ;
- les figures 5,6,7,8 montrent deux vantaux ouverts puis fermés, vus de l'intérieur du véhicule, avec le mécanisme ici proposé ;
- les figures 9,10 montrent les cames respectivement motrice (avec son moteur) et menée ;
- les figures 11,12 montrent la liaison vantail-poutre mobile-poutre fixe suivant deux modes de réalisation;
- les figures 13,18 montre la poutre fixe et son environnement, respectivement de dessus et dessous,
- les figures 14, 15, 16, 17 montrent des détails vus de l'intérieur du véhicule, côté came motrice,
- la figure 19 montre moyen de déverrouillage;
- et la figure 20 montre le principe du verrouillage.

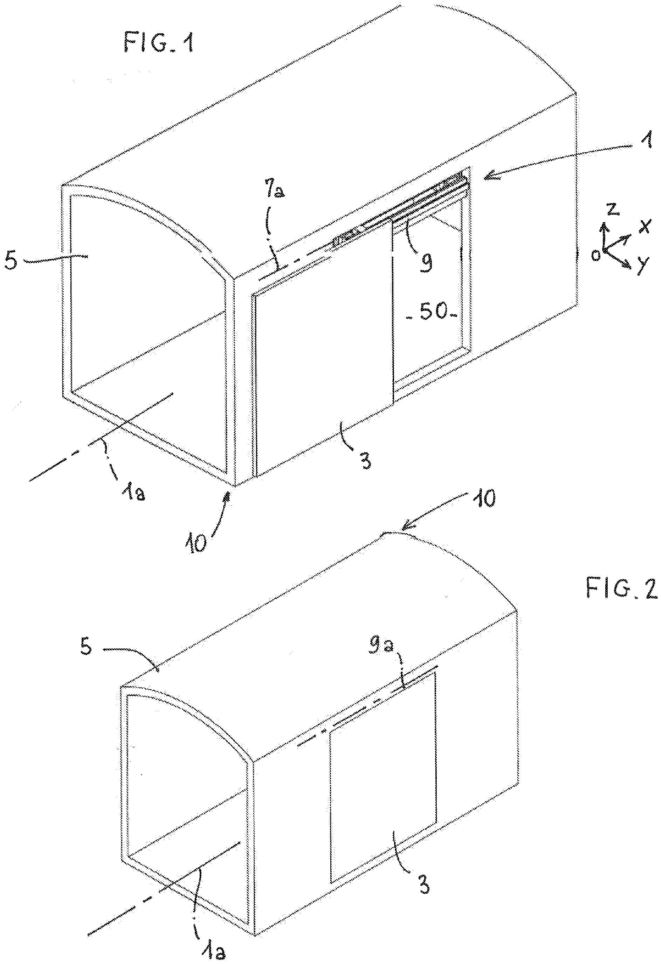

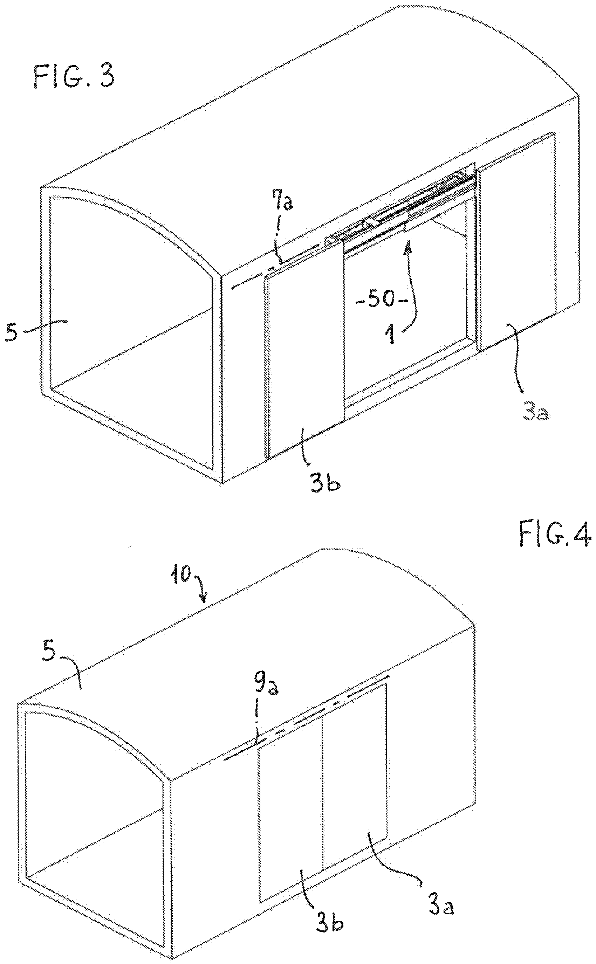

Figure 1, on voit un dispositif 1 de déplacement d'au moins un vantail 3a de porte de véhicule de transport permettant à des passagers d'entrer et de sortir. Une solution à deux vantaux 3a,3b est illustrée figures 3,4, notamment.

Ce dispositif permet de fait un déplacement du/des vantaux par rapport au bâti 5, entre des positions respectivement ouverte (figures 1,3,5,6) et fermée (figures 2,4,7,8), et un verrouillage de ce ou ces vantaux, en position fermée.

Le véhicule 10 est ici un véhicule de transport sur rails.

Il peut être un wagon de tramway par rapport auquel le vantail 3a et/ou 3a se déplace entre des positions respectivement ouverte et fermée.

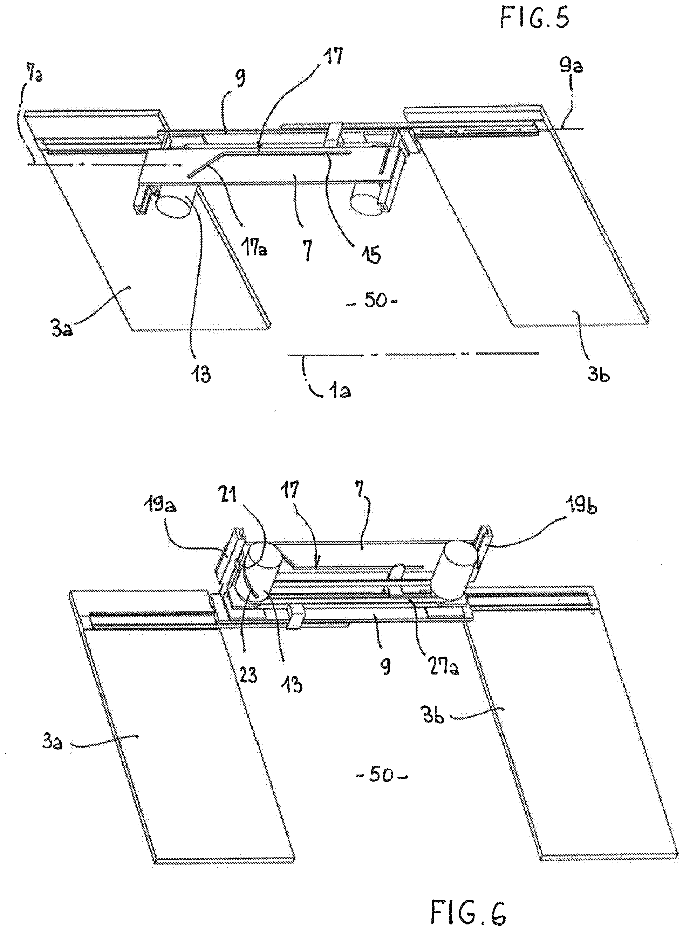

Comme détaillé figure 5 et suivantes, le dispositif 1 équipant le véhicule comprend:
- une poutre fixe 7, fixée au bâti 5,
- une poutre mobile 9 reliée au vantail 3, qui coulisse le long de la poutre mobile 9 et qui a un mouvement de coulissement/ louvoiement vis-à-vis de la poutre fixe 7,
- un moteur 11 fixé à la poutre mobile et qui, lors du louvoiement du vantail, entraîne en outre une came motrice 13,
- et un galet central 15 relié à la poutre mobile, fixé au vantail, tel 3a, et qui circule dans une gorge 17 de la poutre fixe 7 lors du mouvement (coulissement axial et louvoiement du vantail).

La poutre fixe 7 présente un axe d'allongement 7a qui est ici parallèle à l'axe longitudinal la du véhicule 1.

La poutre mobile 9 présente un axe d'allongement 9a sensiblement parallèle à celui de la poutre fixe.

Cette poutre mobile est reliée à la poutre fixe 7 par des rails de louvoiement 19a,19b (figures 6 et suivantes) fixes par rapport à la poutre fixe et qui supportent la poutre mobile en permettant un mouvement de cette poutre mobile transversal par rapport aux axes d'allongement 7a,9a des poutres fixe et mobile.

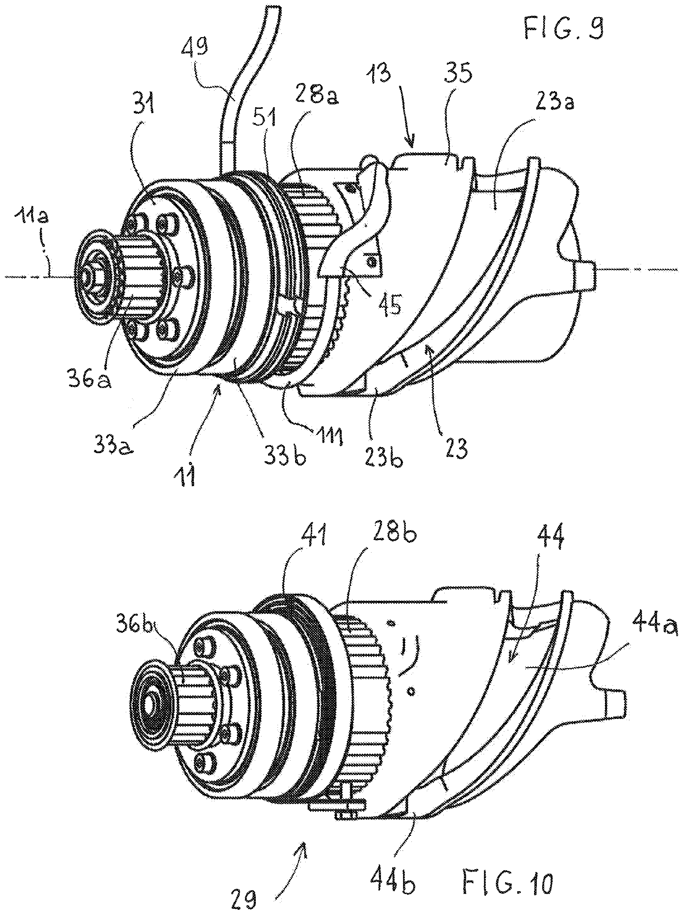

Par ailleurs, la came motrice, ou menante, 13 est pourvue d'une fente 23 (figure 9 notamment) où est engagé un pion 21 fixe sur la poutre fixe 7 (figure 6).

Le moteur 11 entraîne le vantail concerné dans un mouvement parallèle à l'axe d'allongement 9a de la poutre mobile.

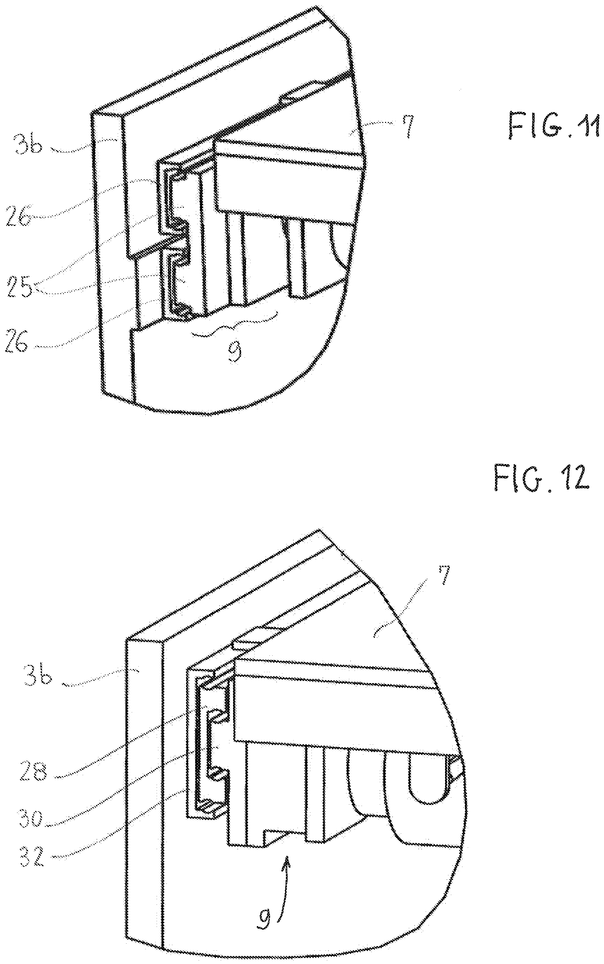

Le ou chaque vantail est favorablement maintenu ou soutenu selon les principes classiques par au moins un coulisseau 25 (appartenant à la poutre mobile 9) se déplaçant à l'intérieur d'au moins un rail en C, 26, avec des billes entre les deux qui permettent le coulissement (voir figure 11) ou de rails télescopiques constitués d'un double système de coulisseau - rail emboités se déployant à l'image d'un télescope, (voir 28/30 et 30/32 figure 12 où le coulisseau 30 appartient à la poutre mobile 9). Ces moyens, liés donc à la poutre mobile 9, assureront alors la liaison poutre 9 - vantail.

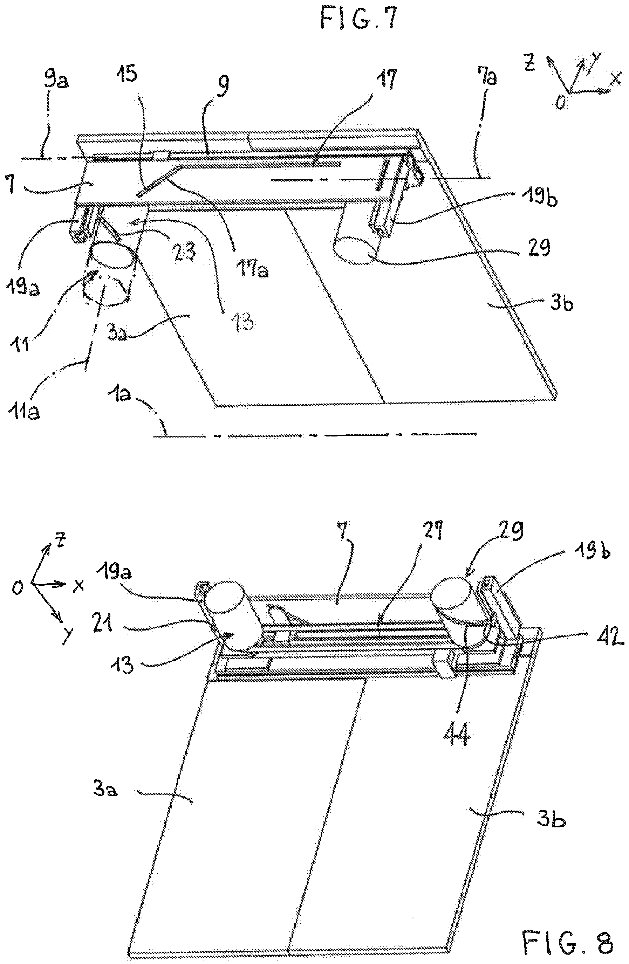

Figure 7 par exemple, on remarque que la gorge 17 de la poutre fixe 7 s'étend horizontalement (axe X) et présente, vers une extrémité, une partie 17a s'étendant de biais par rapport à l'axe 7a d'allongement de la poutre fixe, ceci afin d'imposer le louvoiement au vantail (aux vantaux) concerné(s).

La cinématique est principalement imposée par le guidage présent sur la poutre fixe 7. Ainsi, pendant le mouvement de fermeture et d'ouverture du (des vantaux) concerné(s), le galet central 15 (voir figures 5,7,13) solidaire du mouvement de ce vantail, tel 3a, ou de l'un des vantaux, impose un mouvement de translation (coulissement) aux vantaux (si deux vantaux définissent la porte). En fin du mouvement en direction de la fermeture, ou en début de mouvement en direction de l'ouverture, ce galet central impose un mouvement de louvoiement à l'ensemble de la partie mobile de la porte ; à savoir la poutre mobile 9, les vantaux (3a,3b figure 2), et la motorisation grâce au changement de direction du guidage qui est alors typiquement orienté à environ 45° par rapport à l'axe longitudinal la du véhicule. Le principe permet cependant une orientation de 0 à 90° pour adapter la cinématique. Dans cette phase, le mouvement longitudinal des vantaux continue de façon synchrone avec le mouvement de louvoiement sauf si l'orientation du guidage était de 90°.

Figure 7 notamment, on voit que le moteur 11 s'étend le long d'un des rails 19a de louvoiement, suivant un axe de rotation 11a transversal (ici horizontal et perpendiculaire) à l'axe 7a d'allongement de la poutre fixe.

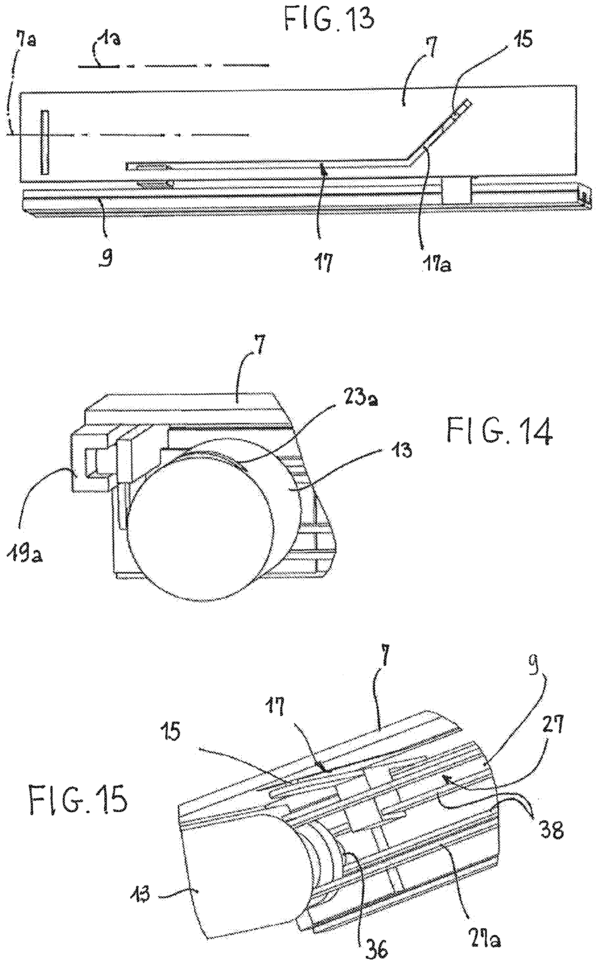

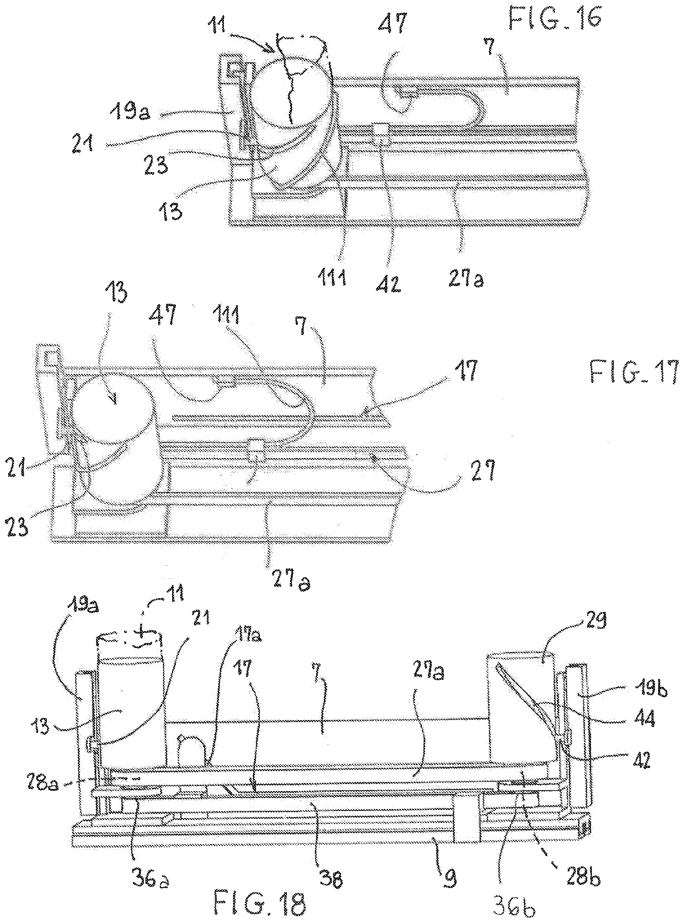

Ce moteur porte coaxialement la came motrice 13 (voir figure 9 notamment), laquelle entraîne, par le moyen de conjugaison 27 (voir figure 15 notamment), la came menée 29 disposée le long de l'autre rail 19b (figures 7, 18 notamment). Le moyen de conjugaison 27 peut favorablement comprendre la courroie 27a entraînée par les poulies de conjugaison respectivement motrice 28a et menée 28b.

Le moteur 11 sera raccordé directement ou, comme montré figure 9, par un réducteur 31 au moyen d'entrainement du (des) vantail (vantaux), ici la poulie 36a qui entraîne la courroie 38 qui est renvoyée par l'autre poulie 36b (figures 9,10,18). Son stator peut aussi tourner selon le principe du stator tournant en entrainant dans son mouvement la came 13 qui lui est solidaire. Pour rappel, le principe du stator tournant revient à permettre une rotation du stator lorsque les efforts de rotation du rotor sont trop importants ou que le mouvement du rotor est bloqué. Selon le principe de l'action et de la réaction, c'est alors le stator qui tourne en sens inverse pour autant que son mouvement soit permis. Dans le cas illustré, deux roulements 33a,33b installés autour du réducteur 31 ou du moteur permettent ce mouvement lorsque le galet central 15 atteint la zone de guidage à 45°.

Comme préféré, si le réducteur 31 est prévu, le moteur 11 sera raccordé par son intermédiaire à la poulie d'entrainementdu vantail.

La fente, telle 23 figure 9, est ici conçue de façon que la rotation du stator du moteur 11 soit conjuguée avec le mouvement de louvoiement de la partie mobile de la porte grâce au pion 21 figure 6 notamment). Cette première partie 23a de la fente a donc une forme en hélice d'axe 11a.

La fente 23 de guidage permet d'autre part de verrouiller la porte (le/chaque vantail). Une seconde partie 23b de la fente est ainsi en portion de cercle d'axe 23b perpendiculaire à l'axe 7a d'allongement de la poutre fixe (ou, comme ici, perpendiculaire à l'axe longitudinal la du véhicule).

Un appendice 35 sur la came peut permettre d'actionner le contact de fin de course de verrouillage.

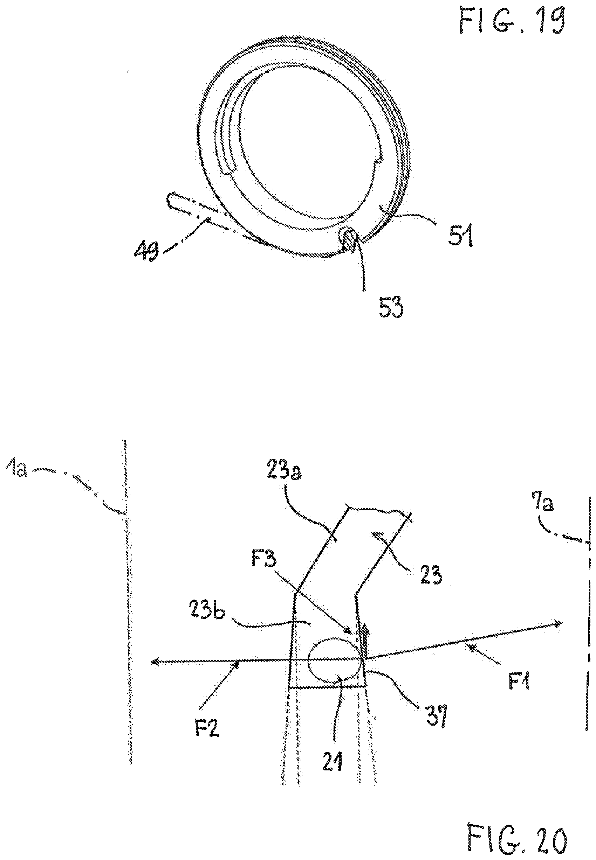

Afin de s'assurer que les efforts générés par la came en cas d'onde de pression ne génèrent pas de déplacement du galet de verrouillage en direction du déverrouillage, l'orientation des parois latérales du rail de guidage pourra être légèrement rentrante en forme d'aronde 37 (tenon en forme de trapèze), comme montré figure 20.

A partir de cette figure, on comprend que, sur le véhicule de transport ferroviaire, la seconde partie 23b de la fente s'étend avec cette forme à l'extrémité de la fente 23. F1 montre la force de réaction du galet sur la came 13 engagée en extrémité de fente, F2 la force générée par l'onde de pression sur la came, et F3 la résultante des forces exercées sur cette came (hors effort du ressort 41). F3 a bien tendance à faire tourner la came 13 vers une confirmation du verrouillage.

La synchronisation ou conjugaison entre la partie motrice (du vantail) de la porte et la partie menée peut être réalisée par une courroie, telle celle 27a, des câbles ou une chaîne, qui vont alors imposer à la deuxième came 29 (menée, donc non motorisée) le même mouvement que celui de la came motrice 13. La came menée 29 coopère donc avec le rail 29b via le pion 42 engagé dans la fente 44 (figures 10, 18), lesquels ont les caractéristiques précitées des éléments 21,23, respectivement. Un guidage similaire à celui de la came motrice va ainsi permettre d'assurer le même mouvement de louvoiement et de confirmer le verrouillage sur la partie menée 29. Le ressort de rappel 41 permet en outre de rappeler la came menée en position verrouillée et d'imposer un seuil minimum d'effort pour déverrouiller (le vantail de) la porte ; voir figure 10. Cet effort de déverrouillage est transmis à la came motrice 13 par la courroie de conjugaison 27a (ou tout moyen 27 ayant la même fonction, tel une chaîne). Par ce ressort 41, le pion 42 va rester engagé dans la portion 44a en arc de cercle de la fente, le moyen de conjugaison 27 transmettant l'effort de déverrouillage à la came motrice. Le moyen de rappel 41 rappellera la came menée 29 de façon que le deuxième pion 42 reste engagé dans la portion en arc de cercle 44a de la fente, le moyen de conjugaison 27 imposant la même position relative du côté opposé, entre le premier pion 21 et la came motrice 13.

Comme pour les parties en hélice, on conseille qu'une partie des fentes 23b,44b des deux cames, motrice et menée, présente une forme en portion de cercle d'axe parallèle à l'axe 7a d'allongement de la poutre fixe. Ainsi, on va favoriser l'équilibre de la porte.

Si, comme proposé préférentiellement, le moteur 11 effectue, lors des ouvertures et fermetures de porte évoquées, une rotation, par exemple de 180°, autour de son axe, un système de guidage de son câble d'alimentation 111 est conseillé.

En particulier (voir figures 9,16,17), le(chaque) câble 111 pourra favorablement passer le long et autour du moyen de conjugaison 27, ainsi que de la came concernée, 13 dans l'exemple. Ce câble sera alors de préférence fixé à la came et au moyen de conjugaison par des pattes, telle 43, le positionnant au droit du moyen de conjugaison.

Ainsi, la courroie de conjugaison 27a assurera la fonction de chaîne porte câble. Un tube 45 (figure 9) ou autre système de fixation fixé sur la came 13/29 pourra favorablement permettre de positionner le câble au droit de la courroie de conjugaison. La courroie de conjugaison assurera le guidage du câble jusqu'au guide-câble 43 fixé sur cette courroie. Lorsque le moteur 11 et la came 13 tourneront, ensemble, le câble 111 se déplacera en même temps que la courroie 27a. Une deuxième boucle pourra favorablement permettre de raccorder le câble à un point fixe de la poutre mobile 9, en effectuant seulement un mouvement de translation comme cela est de préférence requis par les règles de l'art. En 47, on a schématisé le maintien fixe de l'autre extrémité du câble sur la poutre fixe 7.

En termes de fonctionnement, le mode d'action est le suivant pour déplacer, entre les positions précitées respectivement fermée et ouverte, par exemple deux vantaux de porte, tels 3a,3b, le long de l'ouverture 50 du bâti 5 qu'ils dégagent en positions ouverte, pour la circulation à cet endroit des passagers :
- on impose à chaque vantail, via le moteur 11, les moyens d'entraînement (la courroie déjà évoquée notamment) et le moyen de conjugaison 27, un déplacement le long de cette ouverture 50, avec donc louvoiement imposé par rapport au bâti 5, et, pour cela :
- on fait circuler le galet central 15, lié au vantail concerné, dans la gorge 17 de la poutre fixe 7 dont la forme en biais 17a impose le mouvement de coulissement et le mouvement de louvoiement en début d'ouverture ou en fin de fermeture,
- et on assure à la poutre mobile 9, donc aux vantaux, le mouvement transversal recherché par rapport à l'axe d'allongement 7a de la poutre fixe, le long des rails de louvoiement fixes 19a, 19b, ceci donc via le moteur 11, lequel, également fixe sur la poutre mobile 9, entraîne donc, en tournant lors du mouvement de louvoiement, la came motrice 13 dans la fente 23 de laquelle circule le pion 21 et qui, fixe sur la poutre fixe 7, impose à la poutre mobile 9 un mouvement de louvoiement strictement parallèle à l'axe d'allongement 7a de la poutre fixe, grâce au moyen de conjugaison 27, la came menée 29 et le pion 42.

Comme déjà mentionné, on recommande, pour un mouvement adapté des vantaux pour passer de la position fermée verrouillée à la position ouverte le long de la caisse du véhicule et réciproquement, d'assurer le mouvement transversal de la poutre mobile 9 en fin de mouvement vers la fermeture, et en début de mouvement vers l'ouverture, des vantaux qui louvoient alors.

Entre les positions respectivement fermée et ouverte, le pion 21 va alors circuler :
- dans la seconde partie 23b,
- et dans la première partie 23a en forme en hélice de la fente de la came motrice 13.

On notera encore que le déverrouillage manuel ou d'urgence s'effectuera de préférence soit en alimentant le moteur 11 soit en faisant tourner la came, telle 13, grâce à un câble 49 fixée sur une poulie de déverrouillage 51 (figures 9, 19). Une lumière 53 dans la poulie permettra favorablement les mouvements normaux de la came sans que la poulie tourne mais permettra d'entrainer la came lorsque le câble 49 entrainera la poulie en position porte fermée et verrouillée. Ce câble sera de préférence prolongé par un ressort (ou autre moyen de rappel) qui permettra le retour en position du câble et de la poulie 51 lorsque la poignée de déverrouillage d'urgence sera relâchée.

Sur le dispositif précité, considéré dans tout ou partie de ses caractéristiques, les avantages suivants peuvent être mentionnés:
- la longueur du mécanisme est fortement réduite par rapport à ce qui préexiste (hors suspensions et fixation des barres ou bras de conjugaison verticaux) et il est possible d'utiliser le même mécanisme pour des passages libres allant de 1200 à 1500 mm sans modification des pièces : plus de 90% de pièces communes pour deux mécanismes de portes doubles de passages libres différents et plus de 70% de pièces communes entre une porte double et une porte simple,
- la conception du guidage est ainsi faite que les efforts exercés sur la porte selon Oy (onde de pression, poussée des voyageurs) ne provoquent pas le déverrouillage de la porte,
- les tentatives d'ouverture de la porte ou les chocs longitudinaux ne déverrouillent pas non plus cette porte, en raison du galet central, tel 15, qui oblige à réaliser, simultanément à son coulissement longitudinal, un mouvement transversal qui reste bloqué par la came, telle 13,
- l'encombrement du mécanisme est fortement réduit par rapport à ce qui préexiste,
- l'encombrement nécessaire au-delà du passage libre pour fixer les barres de conjugaison verticales peut être inférieur à 210 mm pour une porte simple et 190 mm pour une porte double,
- en choisissant un entrainement par courroie et non par vis-écrou, on doit obtenir, par rapport à ce qui préexiste, une réduction du bruit émis par le mécanisme lors des ouvertures-fermetures.

## Revendications

1. Dispositif de déplacement d'au moins un vantail de porte de véhicule de transport permettant à des passagers d'entrer et de sortir, le véhicule (10) comprenant un bâti par rapport auquel le vantail (3a,3b) se déplace entre des positions respectivement ouverte et fermée, ce dispositif comprenant :
- une poutre fixe (7), fixée au bâti et présentant un axe d'allongement,
- une poutre mobile (9) présentant un axe d'allongement (9a) sensiblement parallèle à celui de la poutre fixe et relié au vantail qui est coulissant le long de la poutre mobile, laquelle est reliée à la poutre fixe (7) par des rails de louvoiement (19a,19b) fixes par rapport à la poutre fixe et qui supportent ladite poutre mobile en permettant un mouvement de la poutre mobile transversal par rapport aux axes d'allongement des poutres fixe et mobile,
- un moteur (11) fixé à la poutre mobile, le moteur (11) s'étendant le long d'un des rails de louvoiement (19a), suivant un axe de rotation (11a) transversal à l'axe d'allongement de la poutre fixe, portant coaxialement une came motrice (13) et étant arrangé de sorte à entraîner le vantail dans un mouvement parallèle à l'axe d'allongement de la poutre mobile
- et un galet central (15) relié à la poutre mobile, fixé au vantail et qui circule dans une gorge (17) de la poutre fixe (7) lors du mouvement du vantail,
**caractérisé en ce que** le moteur est arrangé, lors du louvoiement du vantail, de sorte à entraîner en outre la came motrice (13), laquelle est pourvue d'une fente, où est engagé un pion (21) fixe sur la poutre fixe et dont une première partie de la fente (23) de la came motrice (13) présente une forme en hélice (23a) d'axe transversal par rapport aux axes d'allongement des poutres fixe et mobile, et laquelle came motrice (13) entraîne par un moyen de conjugaison une came menée disposée le long de l'autre rail (19b), la came menée (29) comportant une fente (44) dans laquelle un deuxième pion (42) fixe sur la poutre fixe est engagé.

2. Dispositif selon la revendication 1, où des coulisseau(x) et rail(s) (25, 26, 28, 30, 32 ; 9) sont liés à la poutre mobile (9), pour la relier au vantail.

3. Dispositif selon la revendication 1 ou 2, où la gorge (17) de la poutre fixe (7), qui s'étend horizontalement, présente, vers une extrémité, une partie (17a) s'étendant de biais par rapport à l'axe d'allongement (7a) de la poutre fixe afin d'imposer le louvoiement du vantail.

4. Dispositif selon l'une des revendications 1 à 3, où le moteur (11) présente un stator qui tourne selon le principe du stator tournant en entrainant dans son mouvement la came motrice (13) qui lui est solidaire, des roulements (33a,33b) permettant cela lorsque le galet central (15) atteint ladite partie (17a) de la gorge s'étendant de biais.

5. Dispositif selon l'une des revendications 1 à 3, où le moteur est raccordé par un réducteur à une poulie (36a) d'entrainementdu vantail.

6. Dispositif selon l'une des revendications 1 à 5, où une partie (23b) de la fente de la came motrice présente une forme en portion de cercle d'axe parallèle à l'axe (7a) d'allongement de la poutre fixe (7).

7. Dispositif selon la revendication 1 où :
- une première partie (23a,44a) des fentes des cames motrice (13) et menée (29) présente une forme en hélice d'axe transversal par rapport aux axes d'allongement (7a, 9a) des poutres fixe et mobile, et
- une partie des fentes (23b,44b) des cames motrice et menée présente une forme en portion de cercle d'axe parallèle à l'axe (7a) d'allongement de la poutre fixe.

8. Dispositif selon la revendication 1 ou la revendication 1 et l'une des revendications 4 à 7, où un moyen de rappel (41) rappelle la came menée (29) de façon que le deuxième pion (42) reste engagé dans la portion en arc de cercle (44a) de la fente, le moyen de conjugaison (27) imposant la même position relative du premier pion (21) et de la came motrice (13).

9. Dispositif selon la revendication 1 ou la revendication 1 et l'une des revendications 4 à 8, où le moteur (11) est alimenté électriquement par un câble (111) qui passe le long du moyen de conjugaison (27) et autour de la came, et qui est fixé à ladite came et au moyen de conjugaison (27,27a) par des pattes (42) positionnant ledit câble au droit du moyen de conjugaison (27) .

10. Véhicule de transport ferroviaire comprenant :
- un bâti (5),
- au moins un vantail (3a,3b) de porte permettant à des passagers d'entrer et de sortir du bâti et par rapport auquel le vantail se déplace entre des positions respectivement ouverte et fermée,
- et le dispositif (1) selon l'une des revendications 1 à 9.

11. Véhicule selon la revendication 10, où la partie de la fente (17) de la came motrice (13) qui présente une forme en portion de cercle d'axe parallèle à l'axe d'allongement de la poutre fixe, s'étend suivant une orientation légèrement rentrante vers l'intérieur de la fente, avec une forme d'aronde (37).

12. Procédé pour déplacer, le long d'une ouverture d'un bâti de véhicule de transport, à l'aide d'un dispositif de déplacement selon l'une des revendications 1 à 9, au moins un vantail (3a,3b) de porte, entre des positions respectivement fermée et ouverte permettant à des passagers d'entrer et de sortir du véhicule, **caractérisé en ce qu'**on impose au vantail un déplacement le long de l'ouverture (50), avec louvoiement par rapport au bâti du véhicule :
- en faisant circuler, via le moteur (11) et dans la gorge (17) de la poutre fixe (7) allongée, fixée au bâti le long de l'ouverture de celui-ci, le galet central (15) fixé au vantail,
- et en assurant, en fin du mouvement du vantail en direction de la fermeture ou en début de mouvement en direction de l'ouverture, à la poutre mobile reliée au vantail un mouvement transversal par rapport à l'axe d'allongement de la poutre fixe, dans les rails de louvoiement (19a,19b) fixes vis-à-vis du bâti via le moteur (11) et le galet central dont la trajectoire impose le mouvement transversal, par une partie (17a) de la gorge de la poutre fixe qui s'étend de biais par rapport à l'axe d'allongement de cette poutre fixe.

13. Procédé selon la revendication 12, où le dit mouvement transversal de la poutre mobile (9) conserve le parallélisme des poutres mobiles et fixes grâce aux deux pions (21,42) qui circulent respectivement dans la première et une seconde fentes (23,44), au moins en partie en hélice, d'une part de la came motrice (13) entrainée par la rotation du moteur et d'autre part de la came menée entrainée par la came motrice grâce à un moyen de conjugaison (27).

14. Procédé selon la revendication 12 où, lors du louvoiement du vantail, on fait entraîner par le moteur, fixé à la poutre mobile, la came motrice (13) pourvue de la fente (23) où est engagé le pion (21) fixe sur la poutre fixe.

15. Procédé selon les revendications 12 et 13 où on assure le verrouillage du vantail en position fermée:
- en faisant circuler les deux pions (21,42) respectivement dans les première et seconde fentes (23,44) dont une partie présente une forme (23b,44b) en portion de cercle d'axe parallèle à l'axe d'allongement de la poutre fixe (7) s'étendant suivant une orientation légèrement rentrante (37) vers l'intérieur de la fente, avec une forme d'aronde,
- et en maintenant en position lesdits deux pions par un moyen de rappel (41) qui sollicite l'une des cames de façon que le pion qu'elle reçoit reste engagé dans la portion en arc de cercle de la fente dont elle est pourvue, le moyen de conjugaison (27) imposant la même position relative de l'autre pion et de l'autre came.

## Patentansprüche

1. Vorrichtung zum Bewegen von zu mindestens einem Türflügel eines Transportfahrzeugs, der es Fahrgästen erlaubt, einzusteigen und auszusteigen, wobei das Fahrzeug (10) ein Gestell umfasst, in Bezug auf welchen sich der Türflügel (3a, 3b) zwischen einer jeweiligen offenen und geschlossenen Position bewegt, wobei die Vorrichtung Folgendes umfasst:
- einen stationären Träger (7), der an dem Gestell befestigt ist und eine Ausdehnungsachse aufweist,
- einen beweglichen Träger (9), der eine Ausdehnungsachse (9a) aufweist, die im Wesentlichen zu der des stationären Trägers parallel und mit dem Türflügel verbunden ist, der entlang des beweglichen Trägers gleitet, der mit dem stationären Träger (7) durch Pendelschienen (19a, 19b) verbunden ist, die in Bezug auf den stationären Träger stationär sind und den beweglichen Träger tragen, indem eine Bewegung des beweglichen Trägers quer in Bezug auf die Ausdehnungsachsen des stationären und des beweglichen Trägers erlaubt wird,
- einen Motor (11), der an dem beweglichen Träger befestigt ist, wobei sich der Motor (11) entlang einer der Pendelschienen (19a) entlang einer Rotationsachse (11a) quer zu der Ausdehnungsachse des stationären Trägers erstreckt, die koaxial einen Antriebsnocken (13) trägt und derart eingerichtet ist, dass der Türflügel in einer Bewegung parallel zu der Ausdehnungsachse des beweglichen Trägers angetrieben wird,
- und eine zentrale Walze (15), die mit dem beweglichen Träger verbunden ist, der an dem Türflügel befestigt ist und in einer Nut (17) des stationären Trägers (7) bei der Bewegung des Türflügels läuft, **dadurch gekennzeichnet, dass** der Motor derart eingerichtet ist, dass er beim Pendeln des Türflügels außerdem den Antriebsnocken (13) antreibt, der mit einem Schlitz versehen ist, in den ein Bolzen (21), der auf dem stationären Träger stationär ist, eingefügt ist, und wobei ein erster Teil des Schlitzes (23) des Antriebsnocken (13) eine Schraubenform (23a) mit Querachse in Bezug auf die Ausdehnungsachsen des stationären und des beweglichen Trägers aufweist, und wobei der Antriebsnocken (13) durch ein Verbindungsmittel einen angetriebenen Nocken antreibt, der entlang der anderen Schiene (19b) angeordnet ist, wobei der angetriebene Nocken (29) einen Schlitz (44) umfasst, in den ein zweiter Bolzen (42), der auf dem stationären Träger stationär ist, eingefügt ist.

2. Vorrichtung nach dem Anspruch 1, wobei (ein) Stößel und (eine) Schiene(n) (25, 26, 28, 30, 32; 9) mit dem beweglichen Träger (9) verbunden sind, um ihn mit dem Türflügel zu verbinden.

3. Vorrichtung nach Anspruch 1 oder 2, wobei die Nut (17) des stationären Trägers (7), der sich horizontal erstreckt, zu einem Ende hin einen Teil (17a) aufweist, der sich in Bezug auf die Ausdehnungsachse (7a) des stationären Trägers schräg erstreckt, um dem Türflügel das Pendeln aufzuerlegen.

4. Vorrichtung nach einem der Ansprüche 1 bis 3, wobei der Motor (11) einen Stator aufweist, der gemäß dem Konzept des rotierenden Stators dreht, indem er bei seiner Bewegung den Antriebsnocken (13), der mit ihm fest verbunden ist, antreibt, wobei Lager (33a, 33b) dies erlauben, wenn die zentrale Walze (15) den Teil (17a) der Nut, der sich schräg erstreckt, erreicht.

5. Vorrichtung nach einem der Ansprüche 1 bis 3, wobei der Motor anhand eines Untersetzungsgetriebes an einer Antriebsscheibe (36a) des Türflügels angeschlossen ist.

6. Vorrichtung nach einem der Ansprüche 1 bis 5, wobei ein Teil (23b) des Schlitzes des Antriebsnockens eine Kreisabschnittform mit Achse parallel zu der Ausdehnungsachse (7a) des stationären Trägers (7) aufweist.

7. Vorrichtung nach Anspruch 1, wobei:
- ein erster Teil (23a, 44a) der Schlitze des Antriebsnockens (13) und des angetriebenen Nockens (29) eine Schraubenform mit Achse quer in Bezug auf die Ausdehnungsachsen (7a, 9a) des stationären und des beweglichen Trägers aufweist, und
- ein Teil der Schlitze (23b, 44b) des Antriebsnockens und des angetriebenen Nockens eine Form in Kreisabschnitt mit Achse parallel zu der Ausdehnungsachse (7a) des stationären Trägers aufweist.

8. Vorrichtung nach Anspruch 1 oder Anspruch 1 und einem der Ansprüche 4 bis 7, wobei ein Rückstellmittel (41) den angetriebenen Nocken (29) derart zurückstellt, dass der zweite Bolzen (42) in dem Kreisbogenabschnitt (44a) des Schlitzes eingefügt bleibt, wobei das Verbindungsmittel (27) dieselbe relative Position des ersten Bolzens (21) und des Antriebsnockens (13) auferlegt.

9. Vorrichtung nach Anspruch 1 oder Anspruch 1 und einem der Ansprüche 4 bis 8, wobei der Motor (11) elektrisch von einem Kabel (111) versorgt wird, das entlang des Verbindungsmittels (27) und um dem Nocken verläuft, und an dem Nocken und an dem Verbindungsmittel (27, 27a) durch Pratzen (42) verbunden ist, die das Kabel im rechten Winkel zu dem Verbindungsmittel (27) positionieren.

10. Bahntransportfahrzeug, umfassend:
- ein Gestell (5),
- mindestens einen Türflügel (3a, 3b), der es Fahrgästen erlaubt, in das Gestell einzusteigen und aus ihm auszusteigen und in Bezug auf welches sich der Türflügel zwischen einer jeweiligen offenen und geschlossenen Position bewegt,
- und die Vorrichtung (1) nach einem der Ansprüche 1 bis 9.

11. Fahrzeug nach Anspruch 10, wobei sich der Teil des Schlitzes (17) des Antriebnockens (13), der eine Kreisabschnittform mit Achse parallel zu der Ausdehnungsachse des stationären Trägers aufweist, entlang einer leicht in das Innere des Schlitzes versetzten Ausrichtung mit einer Schwalbenschwanzform (37) erstreckt.

12. Verfahren zum Bewegen entlang einer Öffnung eines Transportfahrzeuggestells mit Hilfe einer Bewegungsvorrichtung nach einem der Ansprüche 1 bis 9, zumindest eines Türflügels (3a, 3b) zwischen einer jeweils geschlossenen und einer offenen Position, der es Fahrgästen erlaubt, in das Fahrzeug einzusteigen und aus ihm auszusteigen, **dadurch gekennzeichnet, dass** man dem Türflügel eine Bewegung entlang der Öffnung (50) mit Pendeln in Bezug auf das Gestell des Fahrzeugs auferlegt:
- indem man über den Motor (11) und in der Nut (17) des länglichen stationären Trägers (7), der an dem Gestell entlang der Öffnung dieses befestigt ist, die zentrale Walze (15), die an dem Türflügel befestigt ist, laufen lässt,
- und indem man am Ende der Bewegung des Türflügels in Richtung des Schließens oder zu Bewegungsbeginn in Richtung des Öffnens für den beweglichen Träger, der mit dem Türflügel verbunden ist, eine Bewegung quer in Bezug auf die Ausdehnungsachse des stationären Trägers in den Pendelschienen (19a, 19b), die in Bezug auf das Gestell stationär sind, über den Motor (11) und die zentrale Walze, deren Bahn die Querbewegung auferlegt, durch einen Teil (17a) der Nut des stationären Trägers, der sich schräg in Bezug auf die Ausdehnungsachse dieses stationären Trägers erstreckt, sicherstellt.

13. Verfahren nach Anspruch 12, wobei die Querbewegung des beweglichen Trägers (9) die Parallelität des beweglichen und stationären Trägers dank den zwei Bolzen (21, 42) behält, die jeweils in dem ersten und dem zweiten Schlitz (23, 44) zirkulieren, mittels eines Teils in Schraubenform, einerseits des Antriebnockens (13), der durch Drehung des Motors angetrieben wird, und andererseits des angetriebenen Nockens, der von dem Antriebsnocken dank einem Verbindungsmittel (27) angetrieben wird.

14. Verfahren nach Anspruch 12, wobei man beim Pendeln des Türflügels den Antriebsnocken (13), der mit dem Schlitz (23) versehen ist, in den der Bolzen (21) eingefügt ist, der auf dem stationären Träger stationär ist, von dem Motor, der an dem beweglichen Träger befestigt ist, antreiben lässt.

15. Verfahren nach Anspruch 12 und 13, wobei man das Verriegeln des Türflügels in geschlossener Position sicherstellt:
- indem man die zwei Bolzen (21, 42) jeweils in dem ersten und zweiten Schlitz (23, 44), von dem ein Teil eine Form (23b, 44b) in Kreisabschnitt mit Achse parallel zu der Ausdehnungsachse des stationären Trägers (7) aufweist, der sich entlang einer Ausrichtung erstreckt, die leicht in das Innere des Schlitzes versetzt (37) ist, mit einer Schwalbenschwanzform, laufen lässt,
- und indem man die zwei Bolzen durch ein Rückstellmittel (41) in Position hält, das einen der Nocken derart beansprucht, dass der Zapfen, den er aufnimmt, in dem Kreisbogenabschnitt des Schlitzes, mit dem er versehen ist, eingerückt bleibt, wobei das Verbindungsmittel (27) dieselbe relative Position in Bezug auf den anderen Bolzen und den anderen Nocken auferlegt.

## Claims

1. Device for moving at least one door leaf of a transport vehicle allowing passengers to enter and exit, the vehicle (10) comprising a frame relative to which the door leaf (3a, 3b) moves between respectively open and closed positions, said device comprising:
- a fixed beam (7) that is fixed to the frame and has an axis of elongation,
- a moving beam (9) having an axis of elongation (9a) that is substantially parallel to that of the fixed beam and connected to the door leaf that slides along the moving beam, which is connected to the fixed beam (7) by sliding-plug rails (19a, 19b) that are fixed relative to the fixed beam and that support said moving beam, while allowing the moving beam to move transversely with respect to the axes of elongation of the fixed and moving beams,
- a motor (11) fixed to the moving beam, the motor (11) extending along one of the sliding-plug rails (19a), along an axis of rotation (11a) that is transverse to the axis of elongation of the fixed beam, coaxially bearing a drive cam (13) and being arranged so as to drive the leaf in a movement parallel to the axis of elongation of the moving beam,
- and a central roller (15) which is connected to the moving beam, fixed to the leaf, and which circulates in a groove (17) in the fixed beam (7) during the movement of the leaf,
**characterised in that** the motor is arranged, during the sliding-plug movement of the leaf, to also drive the drive cam (13), which is provided with a slot, in which a pin (21) is engaged, said pin being fixed to the fixed beam, and a first portion of the slot (23) of the drive cam (13) has a propeller shape (23a) with a transverse axis relative to the axes of elongation of the fixed and moving beams, and which drive cam (13) drives, by a conjugation means, an output cam positioned along the other rail (19b), the output cam (29) comprising a slot (44) in which is engaged a second pin (42) fixed to the fixed beam.

2. Device according to claim 1, wherein one or more sliders and one or more rails (25, 26, 28, 30, 32; 9) are connected to the moving beam (9), to connect same to the leaf.

3. Device according to either claim 1 or claim 2, wherein the groove (17) of the fixed beam (7), which extends horizontally, has, towards one end, a portion (17a) that extends diagonally relative to the axis of elongation (7a) of the fixed beam in order to cause the leaf to undergo the sliding-plug movement.

4. Device according to one of claims 1 to 3, wherein the motor (11) has a stator that rotates according to the rotating stator principle while driving, with the movement thereof, the drive cam (13), which is secured thereto, bearings (33a, 33b) allowing this to take place when the central roller (15) reaches said portion (17a) of the groove extending diagonally.

5. Device according to one of claims 1 to 3, wherein the motor is connected by a reduction gear to a drive pulley (36a) of the leaf.

6. Device according to one of claims 1 to 5, wherein a portion (23b) of the slot of the drive cam has the shape of a portion of a circle, the axis of which is parallel to the axis of elongation (7a) of the fixed beam (7).

7. Device according to claim 1, wherein:
- a first portion (23a, 44a) of the slots of the drive (13) and output (29) cams has the shape of a propeller, the axis of which is transverse relative to the axes of elongation (7a, 9a) of the fixed and moving beams, and
- a portion of the slots (23b, 44b) of the drive and output cams has the shape of a portion of a circle, the axis of which is parallel to the axis of elongation (7a) of the fixed beam.

8. Device according to claim 1, or according to claim 1 and one of claims 4 to 7, wherein a return means (41) returns the output cam (29) such that the second pin (42) remains engaged in the arc of a circle-shaped portion (44a) of the slot, the conjugation means (27) imposing the same relative position of the first pin (21) and of the drive cam (13).

9. Device according to claim 1, or according to claim 1 and one of claims 4 to 8, wherein the motor (11) is electrically powered by a cable (111) that runs along the conjugation means (27) and around the cam, and that is fixed to said cam and to the conjugation means (27, 27a) by lugs (42) positioning said cable at a right angle to the conjugation means (27).

10. Rail transport vehicle comprising:
- a frame (5),
- at least one door leaf (3a, 3b) allowing passengers to enter and exit the frame and relative to which the door leaf moves between respectively open and closed positions,
- and the device (1) according to one of claims 1 to 9.

11. Vehicle according to claim 10, wherein the portion of the slot (17) of the drive cam (13) that has the shape of a portion of a circle, the axis of which is parallel to the axis of elongation of the fixed beam, extends in a slightly inwards direction relative to the slot, with a dovetail shape (37).

12. Method for moving, along an opening of a frame of a transport vehicle, using a movement device according to one of claims 1 to 9, at least one door leaf (3a, 3b) between respectively closed and open positions, allowing passengers to enter and exit the vehicle, **characterised in that** the door leaf is caused to move along the opening (50), by a sliding-plug movement relative to the frame of the vehicle:
- by causing, by means of the motor (11), the passage, in the groove (17) of the elongated fixed beam (7) which is fixed to the frame along the opening thereof, of the central roller (15) fixed to the leaf,
- and by causing, at the end of the movement of the leaf in the closing direction or at the start of the movement in the opening direction, the moving beam connected to the leaf to undergo a transverse movement relative to the axis of elongation of the fixed beam, in the sliding-plug rails (19a, 19b) that are fixed relative to the frame, via the motor (11) and the central roller, the trajectory of which causes the transverse movement, by a portion (17a) of the groove of the fixed beam that extends diagonally relative to the axis of elongation of said fixed beam.

13. Method according to claim 12, wherein said transverse movement of the moving beam (9) retains the parallelism of the moving and fixed beams thanks to the two pins (21, 42) which respectively pass in the first and second slots (23, 44), that are at least partially propeller-shaped, on the one hand of the drive cam (13) driven by the rotation of the motor, and on the other hand of the output cam driven by the drive cam thanks to a conjugation means (27).

14. Method according to claim 12, wherein, during the sliding-plug movement of the leaf, the drive cam (13) is caused to be driven by the motor, fixed to the moving beam, said drive cam being provided with the slot (23) in which is engaged the pin (21) fixed to the fixed beam.

15. Method according to claim 12 and claim 13, wherein the locking of the leaf in the closed position is provided by:
- passing the two pins (21, 42) respectively in the first and second slots (23, 44), one portion of which has the shape (23b, 44b) of a portion of a circle, the axis of which is parallel to the axis of elongation of the fixed beam (7) extending in a slightly inwards direction (37) relative to the slot, with a dovetail shape,
- and by maintaining said two pins in position by a return means (41) which stresses one of the cams such that the pin that it receives remains engaged in the portion in the shape of an arc of a circle of the slot with which it is provided, the conjugation means (27) imposing the same relative position of the other pin and of the other cam.
